# EUROPÄISCHE PATENTSCHRIFT

(11) **EP 1 097 776 B1**
(45) Veröffentlichungstag und Bekanntmachung des Hinweises auf die Patenterteilung: **13.12.2006**
(21) Anmeldenummer: 00123993.8
(22) Anmeldetag: 04.11.2000
(51) Int. Cl.: B23K 9/127, B23K 9/095, B23K 9/12

(54) **Verfahren und Vorrichtung zur Schweisskopfführung beim vollmechanischen Lichtbogenschweissen**
Method and device for guiding the welding torch during automatic arc welding
Méthode et appareil pour le guidage de la tête de soudage lors d'un soudage à l'arc automatique

(30) Priorität: 05.11.1999 DE 19951717
(43) Veröffentlichungstag der Anmeldung: 09.05.2001
(73) Patentinhaber: Reimers, Jan-Dirk, 52068 Aachen (DE)
(72) Erfinder: Reimers, Jan-Dirk, 52068 Aachen (DE)

(56) Entgegenhaltungen:
- EP-A- 0 064 603
- DD-A- 251 304
- US-A- 3 236 997
- US-A- 3 602 687
- US-A- 5 349 156
- PATENT ABSTRACTS OF JAPAN vol. 008, no. 028 (M-274), 7. Februar 1984 (1984-02-07) & JP 58 187268 A (NIPPON KOKAN KK), 1. November 1983 (1983-11-01)

## Beschreibung

Die Erfindung bezieht sich auf ein Verfahren und eine Vorrichtung zur Schweißkopfführung beim vollmechanischen Lichtbogenschweißen, insbesondere auf die Schweißkopfführung beim Lichtbogenschweißen von Aluminium, wobei die Änderung der Lichtbogenstrahlung in einer festen Position ausgehend vom Schweißkopf, die sich bei einer Änderung der Lichtbogenpositionierung in der Fuge ergibt, zur Führungssignalermittlung genutzt wird.

Mechanische Lichtbogenschweißanlagen bedürfen zum Ausgleich von Toleranzen und Verzug der zu verschweißenden Bauteile einer automatischen Nachführung des Schweißbrenners um eine qualitativ hochwertige und richtig positionierte Schweißnaht zu erzeugen. Die Signale zur Positionsermittlung des Brenners und zur Überwachung der Prozeßstabilität werden durch die Ausnutzung diverser physikalischer Effekte erzeugt. Diese Effektoren werden Sensoren genannt, kombiniert mit einer Sensorsignalauswertung und einer Vorschubeinheit für den Schweißbrenner oder das Werkstück lassen sich Schweißkopfführungssysteme aufbauen. Mit ihnen ist ein mechanisches Schweißen möglich.

Das hier vorliegende Problem stellt sich derart dar, das es keinen einfachen, robusten und preiswerten Sensor für das MIGp-Schweißen von Aluminium gibt. Alle für Stahl gängigen und seit Jahren erfolgreich eingesetzten Sensorsysteme versagen bei Aluminium prinzipbedingt. Der prozessorientierte Lichtbogensensor, der weitverbreitetste Sensor beim Schweißen von Stahl, versagt aufgrund des zu geringen ohmschen Widerstands des Aluminiums. Andere Systeme benötigen magnetische Eigenschaften des zu verschweißenden Werkstoffs, die bei Aluminium nicht vorhanden sind.

Die zur Zeit einzige Möglichkeit Aluminium sensorgeführt zu verschweißen, besteht darin, optische Nahtverfolgungssysteme einzusetzen. Diese sind zur Zeit noch teuer, müssen im Arbeitsbereich des Brenners angeordnet werden, wo sie oft stören und eine hohe Empfindlichkeit der Optik gegen Spritzer, Rauch und Reflektionen aufweisen.

Ein Verfahren über eine Videoauswertung des Lichtbogens, welche zusammen mit Strom-, Spannungs- und Akustiksignalen einem neuronalen Netz zugeführt werden, wird in US 5,283,418 beschrieben. Die Videoauswertung bestimmt Intensität und Flächenverteilung des Lichtbogens eines Verfahrens mit abschmelzenden Elektrode. Das trainierte Netz steuert Prozeßdaten und Position des Schweißprozesses.

Es sind weiterhin Sensorsysteme bekannt, die durch das Erfassen der Wärmestrahlung Signale zur Nahtverfolgung oder zur Prozeßüberwachung liefern und bei Aluminium eingesetzt werden könnten.

Ein großer Teil basiert auf optischen Grundlagen und nutzt Linsen und Spiegel um die Signalerfassung auf bestimmte Bereiche zu fokussieren. Es besteht die gleiche Empfindlichkeit gegenüber dem beim Schweißen entstehenden Rauch und den Spritzern.

Es gibt Systeme, die versuchen, die Lichtbogenstrahlung zu umgehen, sie nutzen alleinig die Strahlung des Schmelzbades und des Grundwerkstoffes. So ist in US 4,555,614 ein Verfahren beschrieben, bei welchem der Temperaturverlauf der erzeugten Naht, mittels eines am Brennerkopf befestigten IR-Sensors, der die Wärmestrahlung der Naht nach dem Schweißen erfaßt, überwacht wird. Es wird Strom, Spannung und Schweißgeschwindigkeit dahingehend geregelt, daß die Abkühlgeschwindigkeit gesteuert werden kann.

Ähnlich bei dem in US-PS 3 370 151 vorgeschlagenem Verfahren, bei der die Wärmestrahlung der Schweißraupe hinter dem Lichtbogen zur Auswertung genutzt wird. Ein Strahlungsthermometer wird senkrecht zur Schweißlinie auf der Schweißraupe hinter dem Lichtbogen und der flüssigen Schmelze pendelnd bewegt. Das ausgestrahlte Licht wird durch Linsen und Spiegel in einem Strahlungsthermometer vermessen. Insbesondere der deutliche Strahlungsgradient der Nahtkanten wird erfasst und dient als Ausgangssignal zur Steuerung der Breite der Raupe. Eine Schweißkopfführung ist nicht möglich.

In DE 31 29 283 ist eine Vorrichtung zum Impuls-Lichtbogenschweißen vorgeschlagen, welche die Qualität der Schweißung in Breite und Tiefe sicherstellen soll. Zwischen den Impulsen, in der Grundstromphase, wird mittels einer auf den angeschmolzenen Werkstoff fokussierten Strahlungstemperaturmessung die Temperatur des Werkstoffes ermittelt. Das Ausgangssignal dieser Temperaturmessung bildet die Grundlage für die Schweißbedingungen, z. B. Drahtvorschub, Strom oder Frequenz. Eine Schweißkopfführung ist nicht möglich.

Mit einer weiteren Möglichkeit, die Lichtbogenstrahlung zu umgehen, wird in DE 27 49 117 ein Verfahren vorgeschlagen. Mittels einem Teilstrahlungspyrometer wird die Wärmestrahlung einer bestimmten Wellenlänge erfasst, wodurch der Lichtbogen keine störende Wirkung auf das Messverfahren hat. Durch ein Pendeln des Fokusses der Erfassungseinrichtung quer zur Naht wird ein Strahlungsprofil durch die Schweißstelle erzeugt. Mit diesem Profil werden die seitliche Lage des Brenners geregelt, die Breite der Naht gemessen und Schweißnahtfehler erkannt.

Weiterhin sind Verfahren zur Prozeßregelung bekannt, bei denen die Lichtbogenstrahlung erfaßt wird.

Das Verfahren, das in DE 15 15 281 vorgeschlagen wird, betrifft ein Lichtbogenschweißgerät mit abschmelzender Elektrode, deren Vorschub durch einen, von der Intensität der Lichtbogenstrahlung beeinflußten, Vorschubmotor auf gleichbleibende Lichtbogenlänge gesteuert wird. Einer Photodiode wird über ein Rohr und einen Spiegel die Lichtbogenstrahlung zugeführt. Eine Schweißkopfführung ist nicht möglich.

Daneben wird in JA-PS 44-1824 ein Verfahren erläutert, bei dem der Lichtbogen und das Schmelzbad mit einer Photozelle überwacht wird. Abhängig von den Signalen wird die Schweißgeschwindigkeit geregelt. Eine Schweißkopfführung ist ebenfalls nicht möglich.

In US-PS 5,349,156 ist ein Verfahren zur Qualitätsüberwachung beschrieben, bei dem Lichtintensität der Lichtbogenstrahlung zusammen mit dem Strom und der Spannung gemessen wird, um Aussagen über die Prozeßstabilität und die Art des Werkstoffüberganges des MSG-Schweißprozesses zu erhalten. Eine Intensitätsdiode überwacht den Lichtbogen , deren Signal soll stellvertretend für die Intensität des Lichtbogens sein, aus der direkt die Lichtbogenlänge bestimmt werden soll. Aus einem Vergleich mit den Strom- und Spannungswerten sowie einer Frequenzanalyse kann die Art des Werkstoffübergangs ermittelt werden. Eine Schweißkopffiihrung ist nicht möglich, alleine die Lichtbogenlänge wird geregelt.

Eine Lichtintensitätssteuerung des Schweißprozesses wird in EP-A 0 064 603 vorgeschlagen. Bei einer seitlichen Fehlstellung wird eine asymmetrische Lichtintensitätsverteilung durch eine Blendenwirkung der speziellen Brennerinnengeometrie hervorgerufen, diese wird mit optoelektronischen Bauelementen hinter einer Filterscheibe erfasst und zur Seitenregelung weiterverarbeitet. Nur bei symmetrischen, also mittigen Schweißprozess kann die Höhe über einen absoluten Lichtintensitätsvergleich geregelt werden. Eine Milchglasscheibe als Diffusor und direkten Strahlungsschutz für die Sensoren ist notwendig, ebenso wie eine Kühlung der Sensoren. Als Sensoren werden nur optoelektronische Bauelemente vorgesehen mit schmalem störanfälligen Frequenzspektrum, naturgemäß nichtlinearer Kennlinie und hoher Eigenfrequenz.

Eine weitere Lichtintensitätssteuerung wird in JP-58 187268 A vorgestellt, hier wird alleinig eine Seitenregelung für das Engspaltschweißen vorgeschlagen, bei der zwei lichterfassende Teile (Optiken) die Lichtabstrahlung des Schweißlichtbogens (arc light) zu Photodetektoren leitet, wo sie zu elektrischen Signalen umgewandelt werden. Ziel ist eine Mittenregelung, keine Höhenführung. Auch hier finden optische Elemente (Lichtleiter), die Blendenwirkung des Düsenstocks und optoelektronische Elemente Verwendung. Es sind Nachteile wie Fehler durch Wärmeeinwirkung, zu hohe Grenzfrequenz, Verschmutzung der Optik und stark frequenzabhängige Signale der nichtlinearen optoelektronischen Bauteile zu erwarten.

In DE 34 03 253 bzw. US 4,532,404 wird eine Vorrichtung vorgeschlagen, in welcher eine Wärmestrahlungserfassungseinrichtung auf Wärmestrahlung anspricht, die von einer erwärmten Werkstückfuge und des Schweißelements (Lichtbogen) abgestrahlt wird. Der Fokus dieser Erfassungseinrichtung wird in räumlicher Beziehung zum Schweißbrenner quer vor dem Schweißprozeß gependelt. Auf diese Weise wird ein Wärmestrahlungsprofil längs der quer verlaufenden Abtastlinie bestimmt. Mit dem Wärmestrahlungsprofil quer zu Fuge lassen sich die Fugenkanten der Nahtvorbereitung, der Lichtbogen und das Schmelzbad in ihrer Position zueinander detektieren. Die Signale können zum Steuern der Betriebsdaten des Schweißprozesses bei abschmelzender und nicht abschmelzender Elektrode genutzt werden.

Ein Verfahren für nichtabschmelzende Elektroden wird in US 3,262,006 vorgeschlagen. Über ein in direktem Kontakt mit dem Werkstück stehenden Erfassungsröhrchen wird die Lichtbogenstrahlung konstant in Abstand und Winkel einer Diode oder einem UV Sensor zugeführt. Lichtbogenlängenänderungen verbunden mit einer Änderung der Abstrahlleistung des Lichtbogens lassen auf eine Abstandsänderung des WIG-Brenners schließen. Über das erfassen der Sensorsignale kann die Brennerhöhe bestimmt werden. Verfahrensbedingt nachteilig ist die ähnlich einem Taktilen Sensor auf dem Werkstück vorlaufende Erfassungseinheit.

Aufgabe der Erfindung ist es, ein Verfahren mit entsprechender Vorrichtung anzugeben, welches eine Schweißkopfführung, beruhend auf einer Wärmestrahlungserfassungseinrichtung, ermöglicht, die ohne ausladende externe Anbauteile am Schweißkopf auskommt. Auf optische Elemente zur Strahlungsführung, die gegenüber dem Schweißprozeß empfindlich sind, wie Spiegel, Linsen, Lichtleitfaser oder ähnliches soll verzichtet werden. Es soll keiner Fokussierung expliziter Schmelzbad- oder Lichtbogenbereiche, die eine aufwendige Justierung voraussetzen, bedürfen. Es soll weiterhin keiner Korrelation der Messsignale mit einer Pendelbewegung oder Auslenkung des Messsystems bedürfen, um Signale zur Schweißkopfsteuerung zu erhalten. Und es soll auch keiner Auswertung von Signalpeaks, die auf Kanten oder Lichtbogen schließen lassen bedürfen, wie andere Verfahren es für eine Schweißkopfführung benötigen. Ein einfaches Meß- und Auswerteverfahren soll eine präzise Schweißkopfführung ermöglichen.

Die Aufgabe wird durch das erfindungsgemäße Verfahren dadurch gelöst, daß die Änderung im Wärmestrom des Lichtbogens, die sich bei einer Änderung der Kontaktrohrposition in der Schweißfuge ergibt, durch verfahrensgemäßes Erfassen des Strahlungsaustausches zwischen Lichtbogen und Schweißkopf ortsfest zu diesem ermittelt wird und zur Führung des Schweißbrenners genutzt wird, wobei der. Wärmestrom sich über die Temperatur bestrahlter Messfiihler und deren temperaturabhängiges Signal messen lässt.

Der Wärmestrom kann direkt für die Positionsbestimmung genutzt werden. Ein Vergrößern des Kontaktrohrabstandes äußert sich durch eine Verringerung des Betrages des Wärmestromes und umgekehrt. Eine seitliche Fehlstellung des Brenners in Nähten mit Flanken äußert sich in einer Differenz der Beträge der Wärmeströme, gemessen von seitlich am Schweißkopf angeordneten Messfühlern, hervorgerufen durch Änderung der Einstrahlzahlen an den Fugenflanken.

Mit ausgenutzt wird hier der Effekt, der als "innere Regelung" oder "innerer Selbstausgleich" bei einer Schweißstromquelle mit Konstantspannungscharakteristik bezeichnet wird. Ein sich selbst einstellendes Gleichgewicht zwischen Drahtfördergeschwindigkeit und umgesetzter Leistung führt zu einer näherungsweise konstanten Lichtbogenlänge bei nahezu konstantem Strom. Damit bleibt die im Lichtbogen umgesetzte Leistung bei verschiedenen Kontaktrohrabständen nahezu auf gleichem Niveau. Mit einer gleichbleibenden Lichtbogenlänge bleiben die Strahlungsbedingungen des Lichtbogens, zusammengesetzt aus Temperatur, Abstrahlfläche und Einstrahlzahl bei Änderungen des Kontaktrohrabstandes ebenfalls konstant, da sich nur die freie Drahtlänge ändert. Der erfindungsgemäß örtlich zu messende Wärmestrom auf den Schweißkopf ist somit nur abhängig vom Abstand zum Lichtbogen bei der Erfassung der Höhe über der Fuge bzw. den Einstrahlzahlen der Fugenflanken bei der Erfassung der seitlichen Relativstellung in der Fuge.

Diese hier genutzten physikalischen Gesetzmäßigkeiten beim MSG-Schweißen (GMAW) stehen im fundamentalen Gegensatz zu den Zusammenhängen beim WIG-Schweißen (GTAW).

Bei der erfindungsgemäßen Einrichtung, welche das Verfahren nach den Ansprüchen 1 bis 3 umsetzt, ist es wesentlich, daß die Messfühler zwecks einer großen Signalamplitude nahe beim Lichtbogen angeordnet sind. Die Meßvorrichtung erzeugt dann Signaländerungen bei einer Höhenänderung des Brenners, die um das Vierfache die Signalamplitude des gängigen Lichtbogensensors bei gleichen Höhenänderungen übersteigt. Zusätzlich kann das System prinzipbedingt auch für das MSG-Schweißen von Aluminium eingesetzt werden, was der Lichtbogensensor nicht kann. Die Signalauswertung ist einfach im Vergleich mit anderen Sensorprinzipien. Da es keiner Pendelung bedarf um die Seitenfehlstellung zu ermitteln, kann kontinuierlich mit hoher Frequenz gemessen werden. Das alles bedeutet, das der Aufwand der Signalbearbeitung verringert werden kann, und das System genauer und schneller arbeiten kann als bestehende Systeme.

Die Strahlung des Schmelzbades oder der veränderlichen Blechkanten führt bei dem vorgeschlagenen Verfahren nicht zu einer Behinderung der durch die Lichtbogenstrahlung geführten Schweißkopfführung, da die Temperatur mit der vierten Potenz in den Wärmestrom eingeht und die Temperatur des Lichtbogenplasmas mehr als das Zehnfache der Temperatur der Schmelze oder der Blechkanten beträgt.

Vorteilhaft bei der Ausführung ist eine Positionierung der Messfühler direkt an bzw. innerhalb der Schutzgasdüse. Der Einsatzbereich des Schweißbrenners wird durch keine externen Anbauteile eingeschränkt, wie es bei den herkömmlichen, oben genannten Verfahren der Fall ist. Mit geeigneten Sensoren und bei einer Anordnung der Messfühler innerhalb der Schutzgasdüse ergibt sich keine Gefährdung der Messfühler durch die schweißtechnisch bedingte Gas-, Rauch- und Spritzerentwicklung, vorausgesetzt ist hierbei ein spritzerarmer Sprühlichtbogen oder Impulslichtbogen, der im Sinne eines sauberen Nahtbildes ohne Nachbearbeitung ohnehin wünschenswert ist.

Ein weiterer Vorteil der Montage der Messfühler in der Schutzgasdüse ist die Schutzgasabdeckung, die gegen Oxidation der Meßelemente bei den hohen auftretenden Temperaturen schützt.

Vorteilhaft ist auch, wenn die Messfühler thermisch isoliert sind, und so gegenüber einer konvektiven Erwärmung durch ihre thermisch träge Umgebung geschützt sind. Dies geschieht am besten mit Keramikkomponenten, bei weiter entfernter Montage vom Lichtbogen mit Kunststoffen.

Eine vorteilhafte Ausgestaltung ergibt sich mit der Nutzung mehrerer Messfühler und einer Überwachungseinrichtung, die den Status sowie die Anzahl der intakten Messfiihler angibt.

Bei einer Unterschreitung der für eine gesicherte Regelung nötigen Mindestanzahl der Messfühler ist es sinnvoll, dieses kenntlich zu machen, und den Schweißvorgang abzubrechen. Für eine Höhenregelung ist ein Messfiihler ausreichend, für eine Seitenführung sind es zwei. Je nach Sicherheitsanspruch kann die untere Mindestanzahl für die Überwachungseinrichtung festgelegt werden.

Eine vorteilhafte Ausgestaltung für einen Einsatz in der Serienfertigung ist, wenn der Sensorkopf, bestehend aus mehreren Messfühlern und der Schutzgasdüse, eine Einheit bildet, die anhand eines Mehrfachsteckers komplett mit der Schutzgasdüse zusammen getauscht werden kann.

Vorteilhafte Ausführungen und Weiterbildungen der Erfindung sind Gegenstand von Unteransprüchen.

Im folgenden sind Ausführungsbeispiele der Erfindung in den Zeichnungen dargestellt und werden anhand der Figuren näher erläutert. Im Einzelnen zeigen:
Fig. 1: eine schematische Darstellung einer erfindungsgemäßen Vorrichtung;
Fig. 2: schematisch eine Schweißung mit Höhenänderung;
Fig. 3: schematisch eine Schweißung mit seitlicher Fehlstellung in der Kehle;
Fig. 4: ein Diagramm der Signale beim Überschweißen einer Stufe nach Fig. 2;
Fig. 5: ein Diagramm der Signale beim Schweißen mit seitlicher Fehlstellung in der Kehle nach Fig. 3
Fig. 6a/b: eine schematische Darstellung einer Meßanordnung mit Thermoelementen
Fig. 7a/b: eine schematische Darstellung einer Meßanordnung mit Halbleiterelement.

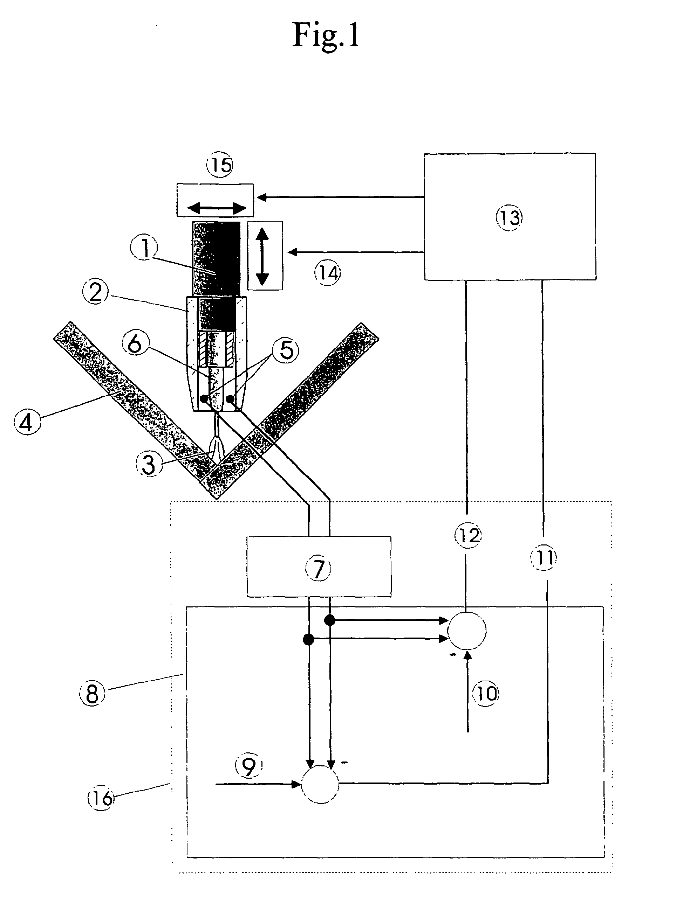

Wie aus Fig. 1 ersichtlich ist, bilden zwei Werkstücke eine Kehlnaht 4 mit deutlichen Flanken, welche mittels einer Schweißnaht verbunden werden sollen. Der im Schnitt dargestellte Schweißbrenner 1 fördert durch das Kontaktrohr 6 den Schweißdraht, welcher im Lichtbogen 3 aufgeschmolzen wird. Die vom Lichtbogen ausgehende Wärmestrahlung wird an den Meßfühlern 5 messtechnisch erfaßt. In einer Signalbearbeitung 7 können Filter und Mittelwertbildner die Meßwerte aufbereiten, um ein konstanteres Signal zu erhalten. In einer ebenfalls in 7 enthaltenen Überwachungseinheit können die Messsfühler auf ihre Funktion überprüft werden, ausgefallene Messfühler werden nicht mehr zur Signalermittlung in der Auswerteeinheit 8 genutzt. Die Anzahl der intakten Messfühler wird optisch kenntlich gemacht, bei unterschreiten einer gewählten Mindestzahl wird der Schweißvorgang ausgesetzt. In der Auswerteeinheit 8 werden die Meßwerte nach in den Ansprüchen erläuterten Prinzipien, zusammen mit den bekannten Regelalgorithmen, in Steuerungssignale 12 und 11 umgesetzt, welche in der Vorschubansteuerung 13 zu einer Positionskorrektur des Schweißbrenners 1 durch die angetriebenen Achsen 14 und 15 führen. Der Absolutwert der Meßfühler 5 kann mit mehreren Meßstellen aufsummiert werden, um eine Ausfallsicherheit zu erhalten und mit einem Höhensollwert 10 verglichen zur Regelung des Höhenvorschubes 14 verwendet werden. Die Differenzbildung der Messsignale der seitlichen Messfühler in Bezug zur Schweißlinie kann ebenfalls mit mehreren Messfühlern gebildet und, mit einem Seitenvergleichswert 9 verglichen, zur Ansteuerung des Seitenvorschubes 15 verwendet werden. Die gesamte Ermittlung der Positionskorrekturwerte 11 und 12 innerhalb des Bereiches 16 kann wahlweise analog oder digital vorgenommen werden.

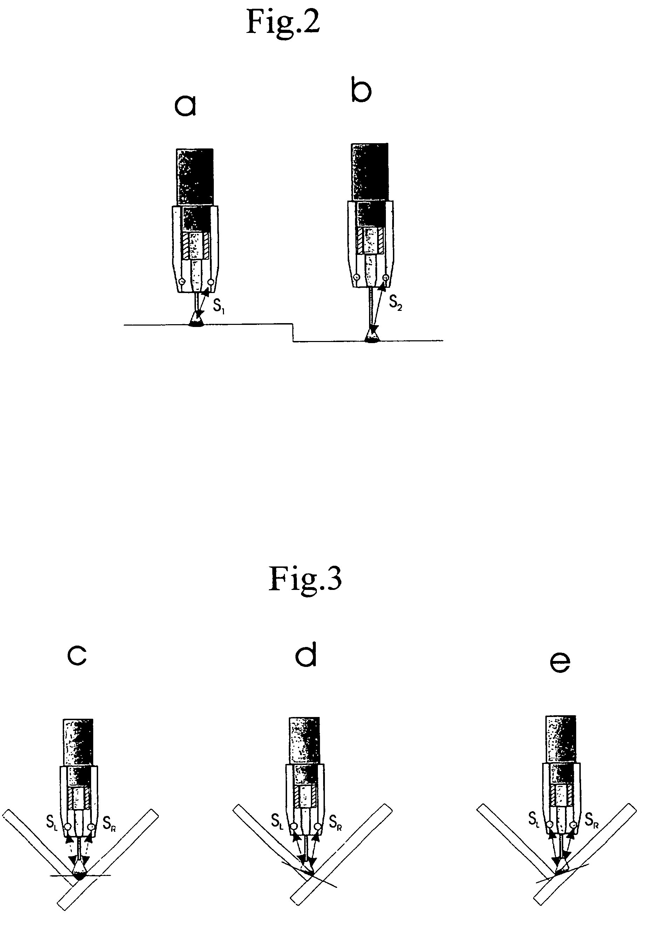

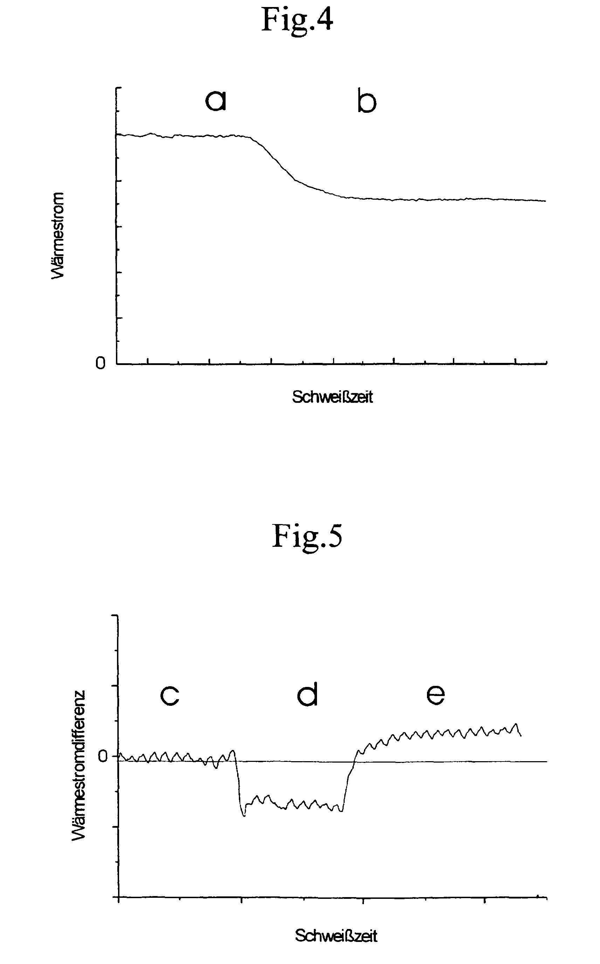

In Fig. 2 ist eine schematische Schweißung über eine Stufe angedeutet, in Fig. 4 ist das dazugehörige Messsignal des in den Ansprüchen ausgeführten Messverfahrens dargestellt. Deutlich zu erkennen ist die Stufe in dem Meßsignal, das die Wärmestrahlung auf den Brennerkopf in Position a vor der Stufe mit Abstand S₁ und in Position b nach der Stufe mit Abstand S₂ wiedergibt.

In Fig. 3 ist eine schematische Schweißung in der Kehle c und mit seitlicher Fehlstellung d, links auf der Fugenflanke und e, rechts auf der Fugenflanke, in einer Kehlnaht angedeutet. In Fig. 5 ist das dazugehörige Messsignal des in den Ansprüchen ausgeführten Messverfahrens dargestellt, welches hier mit einer Differenzbildung erstellt wurde. Bei diesem Messsignal ergibt sich die Differenz der Wärmeströme aus den seitlichen Meßwerten der Strahlung längs der Strecken S_{L} und S_{R} und vor allen Dingen aus den veränderten Einstrahlzahlen der Fugenflanken gegenüber einer symmetrischen Positionierung.

Der Wärmestrom läßt sich über die Temperatur bestrahlter Meßfühler (z. B. Thermoelemente Halbleitertemperaturelemente, temperaturabhängige Widerstände etc.) und deren temperaturabhängiges Signal messen.

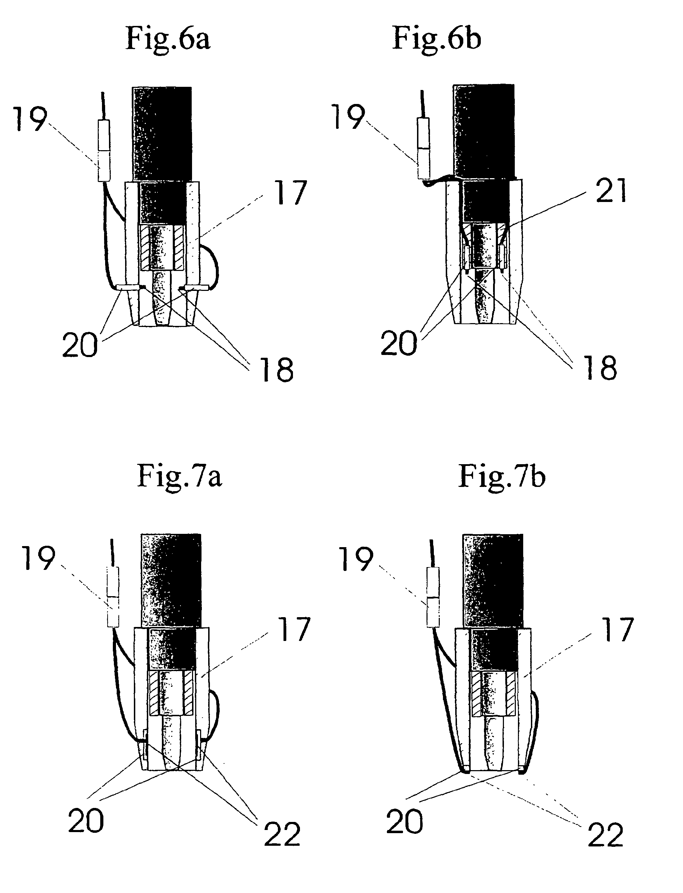

Die Meßanordnung läßt sich nach den Unteransprüchen vorteilhaft ausgestalten, wie es in Fig. 6a/bund 7a/b anhand von Beispielen dargestellt ist. In Fig. 6a sind Thermoelemente 18 als Meßfühler innerhalb der Schutzgasdüse 17 angeordnet. Sie sind dort bei den lichtbogennahen hohen Temperaturen vor Oxidation geschützt. Die thermische Isolierung 20 verringert die konvektive Erwärmung durch die Schutzgasdüse 17 und dient als Kabeldurchführung nach außen. Fig. 6a zeigt eine Meßposition integriert in den Gasverteiler 21, die Meßfiihler liegen geschützter und lassen eine automatische Brennerreinigung zu. Gezeigt ist beidemal eine Ausführung mit punktförmiger Meßstelle, denkbar ist auch eine flächige, in die Schutzgasdüsenwand, den Gasverteiler oder das Kontaktrohr integrierte, Meßstelle. Die Thermoelemente ermitteln die Strahlung in Form einer proportionalen Thermospannung. Die Schutzgasdüse 17 läßt sich mit der Steckverbindung 19 zusammen auswechseln. Ebenso wie die in Fig. 7a/b dargestellte Ausführungen mit flächigen Halbleiterwiderstandselementen 22, welche einen temperaturabhängigen Widerstand haben, der als geeignetes Nutzsignal dient.

Fig.7a zeigt eine in die Schutzgasdüse 17 integrierte thermische Isolierung 20 aus Keramik oder Kunststoff, auf die die Meßfühler 18 oder 22 befestigt werden können. Fig 7b zeigt eine weitere denkbare Meßposition an der Spitze der Schutzgasdüse.

### Bezugszeichenliste

- 1: Schweißbrenner
- 2: Schweißkopf
- 3: Lichtbogen
- 4: Schweißfuge
- 5: Meßfühler
- 6: Kontaktrohr
- 7: Signalaufbereitung /Überwachungseinheit
- 8: Auswerteeinheit
- 9: Seitenvergleichswert
- 10: Höhensollwert
- 11: Seitenkorrekturwert
- 12: Höhenkorrekturwert
- 13: Vorschubansteuerung
- 14: Höhenvorschub
- 15: Seitenvorschub
- 16: Steuerungseinheit
- 17: Schutzgasdüse
- 18: Thermoelemente
- 19: Steckverbindung
- 20: Thermische Isolierung
- 21: Gasverteiler
- 22: Temperaturabhängiger Widerstand

## Patentansprüche

1. Verfahren zur Schweißkopfführung beim automatischen Lichtbogenschweißen mit Konstantspannungsquelle, I/I- oder U/I-geregelten Impulsquellen und geförderter Drahtelektrode unter Verwendung von Messfühlern (5), **dadurch gekennzeichnet, dass** die Änderung des Wärmestromes des Lichtbogens (3) in einer festen Position ausgehend vom Schweißkopf (2,17), die sich bei einer Änderung der Kontaktrohrposition (6) zum Werkstück (4) ergibt, zur Führung des Schweißkopfes genutzt wird, wobei der Wärmestrom sich über die Temperatur bestrahlter Messfühler und deren temperaturabhängiges Signal messen lässt.

2. Verfahren nach Anspruch 1, **dadurch gekennzeichnet, daß** die ermittelten Beträge des Wärmestromes einer Brennerhöhe zuzuordnen sind.

3. Verfahren nach Anspruch 1, **dadurch gekennzeichnet, daß** ein Vergleich der Beträge der seitlich am Brenner ermittelten Wärmeströme, einer seitlichen Brennerfehlstellung zuzuordnen ist.

4. Vorrichtung zur Schweißkopfführung beim automatischen Lichtbogenschweißen mit Konstantspannungsquelle, I/I- oder U/I-geregelten Impulsquellen und geförderter Drahtelektrode unter Verwendung von Messfühlern (5) nach den Verfahren in den obigen Ansprüchen, **dadurch gekennzeichnet, dass** ein oder mehrere Messfühler (5,18,22) ortsfest zum Schweißkopf (2) ein den Wärmeströmen des Lichtbogens (3) proportionales Signal erzeugen, welche zur Steuersignalermittlung und Schweißkopfführung genutzt werden, wobei der Wärmestrom sich über die Temperatur bestrahlter Meßfühler und deren temperaturabhängiges Signal messen lässt.

5. Vorrichtung nach Anspruch 4, **dadurch gekennzeichnet, dass** diese Signale in einer Signalaufbereitung (7) verstärkt und mittels geeigneter mathematischer Verfahren (Mittelwertbildung, Filter, FFT, etc.) weiterverarbeitet werden.

6. Vorrichtung nach Anspruch 4, **dadurch gekennzeichnet, dass** in einer Auswerteeinheit (8) mit diesen Signalen durch Vergleich mit einem Höhensollwert (10) Höhensteuersignale (12) erzeugt werden.

7. Vorrichtung nach Anspruch 4, **dadurch gekennzeichnet, dass** in einer Auswerteeinheit (8) mit diesen Signalen durch Vergleich der seitlichen Signale miteinander und mit einem Seitenvergleichswert (9) Seitensteuersignale (11) erzeugt werden.

8. Vorrichtung nach einem der vorherigen Ansprüche, **dadurch gekennzeichnet, dass** in einer Vorschubansteuerung (13) die Steuersignale (11,12) zur Ansteuerung der Positionierachsen (14,15) genutzt werden.

9. Vorrichtung nach Anspruch 4, **dadurch gekennzeichnet, dass** sich ein oder mehrere Messfiihler (5,18,22) innerhalb der Schutzgasdüse (17) in der Schutzgasatmosphäre befinden.

10. Vorrichtung nach Anspruch 4, **dadurch gekennzeichnet, dass** sich ein oder mehrere Messfiihler (5,18,22) zum Brennerkopf thermisch isoliert nahe beim Lichtbogen (3) befinden.

11. Vorrichtung nach Anspruch 4, **dadurch gekennzeichnet, dass** mehrere Messfühler (5,18,22) ausgewertet werden um eine Sicherheit gegen Ausfall zu erhalten.

12. Vorrichtung nach einem der vorherigen Ansprüche 4 bis 11, **dadurch gekennzeichnet, dass** zusätzlich eine Überwachungseinrichtung (7) den Zustand der Messfühler (5,18,22) kontrolliert, und die Anzahl der intakten Messfiihler angibt.

13. Vorrichtung nach Anspruch 12, wobei die Überwachungseinrichtung (7) so ausgestattet ist, dass bei Unterschreiten einer, für das Verfahren nötigen, Mindestanzahl von Messfühlern dieses kenntlich gemacht wird und der Schweißprozess ausgesetzt wird.

14. Vorrichtung nach einem der vorherigen Anspruche 4 bis 13, **dadurch gekennzeichnet, dass** die Messfühler (5,18,22) mit der Schutzgasdüse (17) als Einheit ausgewechselt werden können, wobei die Ankopplung der Messfühlern (5) an die Steuerungseinheit (16) hier durch geeignete Kabelsteckverbindungen (19) erfolgt.

## Claims

1. A method for guiding the welding head in automatic arc-welding with constant-voltage source, I/I- or U/I-controlled pulse sources and conveyed wire electrode by using probes (5), **characterized in that** the change of the heat flow of the arc (3) in a fixed position originating from the welding head (2, 17) which is obtained in a change of the contact tube position (6) relative to the workpiece (4) is used for guiding the welding head, with the heat flow being measurable via the temperature-irradiated probes and their temperature-dependent signal.

2. A method according to claim 1, **characterized in that** the determined rates of the heat flow can be allocated to a welding torch height.

3. A method according to claim 1, **characterized in that** a comparison of the rates of the heat flow determined laterally on the welding torch can be allocated to a lateral misadjustment of the welding torch.

4. An apparatus for guiding the welding head in automatic arc-welding with constant-voltage source, I/I- or U/1-controRed pulse sources and conveyed wire electrode by using probes (5) according to the methods in the above claims, **characterized in that** one or several probes (5, 18, 22) stationary relative to the welding head (2) generate a signal proportional to the heat flow of the arc (3) which are used for determining the control signal and guidance of the welding head, with the heat flow being measurable via temperature-irradiated probes and their temperature-dependent signal.

5. An apparatus according to claim 4, **characterized in that** such signals are amplified in a signal conditioning (7) and are further processed by means of suitable mathematical processes (averaging, filter, FFT, etc.).

6. An apparatus according to claim 4, **characterized in that** height control signals (12) are generated in an evaluation unit (8) with these signals by comparison with a setpoint height value (10).

7. An apparatus according to claim 4, **characterized in that** lateral control signals (11) are generated in an evaluation unit (8) with these signals by comparison of the lateral signals with each other and with a lateral comparison value (9).

8. An apparatus according to one of the preceding claims, **characterized in that** the control signals (11, 12) are used for triggering positioning axles (14, 15) in a forward feed control unit (13).

9. An apparatus according to claim 4, **characterized in that** one or several probes (5, 18, 22) are present within the inert gas nozzle (17) in the inert gas atmosphere.

10. An apparatus according to claim 4, **characterized in that** one or several probes (5, 18, 22) are situated close to the arc (4) in a thermally insulated manner from the welding head.

11. An apparatus according to claim 4, **characterized in that** several probes (5, 18, 22) are evaluated in order to obtain security against failure.

12. An apparatus according to one of the preceding claims 4 to 11, **characterized in that** a monitoring device (7) additionally monitors the state of the probes (5, 18, 22) and states the number of the intact probes.

13. An apparatus according to claim 12, with the monitoring device (7) being configured in such a way that on falling below a minimum number of probes required for the process this is made known and the welding process is suspended.

14. An apparatus according to one of the preceding claims 4 to 13, **characterized in that** the probes (5, 18, 22) can be exchanged with the inert gas nozzle (17) as a unit, with the coupling of the probes (5) to the control unit (16) occurring in this case by a suitable cable plug-in connection (19).

## Revendications

1. Procédé pour le guidage de la tête de soudage dans le soudage automatique à l'arc électrique avec source de tension constante, sources d'impulsions régulées en I/I ou U/I et fil-électrode transporté, utilisant des sondes de température (5), **caractérisé en ce que** la modification du flux de chaleur de l'arc électrique (3) dans une position fixe par rapport à la tête de soudage (2, 17) qui est obtenue par la modification de la position du tube de contact (6) par rapport à la pièce (4) est utilisée pour guider la tête de soudage, le flux de chaleur pouvant être mesuré à l'aide de la température des sondes de température exposées et de leur signal dépendant de la température.

2. Procédé selon la revendication 1, **caractérisé en ce que** les grandeurs déterminées du flux de chaleur doivent être associées à une hauteur de la torche.

3. Procédé selon la revendication 1, **caractérisé en ce qu'**une comparaison des grandeurs du flux de chaleur déterminées sur le côté de la torche doit être associé à une erreur de position latérale de la torche.

4. Dispositif pour le guidage de la tête de soudage dans le soudage automatique à l'arc électrique avec source de tension constante, sources d'impulsions régulées en I/I ou U/I et fil-électrode transporté, utilisant des sondes de température (5), selon le procédé des revendications précédentes, **caractérisé en qu'**une ou plusieurs sondes de mesure (5, 18, 22) stationnaires par rapport à la tête de soudage (2) produisent un signal proportionnel au flux de chaleur de l'arc électrique (3) qui est utilisé pour déterminer le signal de commande et guider la tête de soudage, le flux de chaleur pouvant être mesuré à l'aide de la température des sondes de mesure exposées et de leur signal dépendant de la température.

5. Dispositif selon la revendication 4, **caractérisé en ce que** ces signaux sont amplifiés dans un circuit de traitement des signaux (7) et traités au moyen des méthodes mathématiques appropriées (calcul de la moyenne, filtres, TFR, etc.).

6. Dispositif selon la revendication 4, **caractérisé en ce que** des signaux de commande de la hauteur (12) sont générés dans une unité d'interprétation (8) à partir de ces signaux par comparaison avec une consigne de hauteur (10).

7. Dispositif selon la revendication 4, **caractérisé en ce que** des signaux de commande latérale (11) sont générés dans une unité d'interprétation (8) à partir ces signaux par comparaison des signaux latéraux les uns avec les autres et avec une valeur de comparaison latérale (9).

8. Dispositif selon l'une quelconque des revendications précédentes, **caractérisé en ce que** les signaux (11, 12) sont utilisés dans une commande d'avancement (13) pour commander les axes de positionnement (14, 15).

9. Dispositif selon la revendication 4, **caractérisé en ce qu'**une ou plusieurs sondes de mesure (5, 18, 22) se trouvent dans l'atmosphère de gaz protecteur à l'intérieur de la buse de gaz protecteur (17).

10. Dispositif selon la revendication 4, **caractérisé en ce qu'**une ou plusieurs sondes de mesure (5, 18, 22) se trouvent près de l'arc électrique (3) avec une isolation thermique par rapport à la tête de la torche.

11. Dispositif selon la revendication 4, **caractérisé en ce que** plusieurs sondes de mesure (5, 18, 22) sont interprétées afin d'obtenir une sûreté contre les pannes.

12. Dispositif selon l'une quelconque des revendications 4 à 11, **caractérisé en ce qu'**il est prévu en outre une installation de surveillance (7) qui contrôle l'état des sondes de mesure (5, 18, 22) et indique le nombre de sondes de mesure intactes.

13. Dispositif selon la revendication 12, **caractérisé en ce que** l'installation de surveillance (7) est équipée de telle manière que lorsque le nombre minimum de sondes de mesure nécessaire pour le procédé n'est pas atteint, cela est signalé et l'opération de soudage est suspendue.

14. Dispositif selon l'une quelconque des revendications 4 à 13, **caractérisé en ce que** les sondes de mesure (5, 18, 22) peuvent être remplacées d'un seul tenant avec la buse de gaz protecteur (17), le couplage des sondes de mesure (5) à l'unité de commande (16) étant alors réalisé par des branchements de câbles (19) appropriés.
